# FASCICULE DE BREVET EUROPEEN

(11) **EP 3 461 744 B1**
(45) Date de publication et mention de la délivrance du brevet: **27.11.2019**
(21) Numéro de dépôt: 18183600.8
(22) Date de dépôt: 16.07.2018
(51) Int. Cl.: B64D 29/08

(54) **TURBORÉACTEUR DOUBLE FLUX POUR UN AÉRONEF AVEC UNE OUVERTURE AMÉLIORÉE**
SCHUBUMKEHRERTRIEBWERK FÜR FLUGZEUG MIT VERBESSERTER ÖFFNUNG
THRUST REVERSER TURBOFAN ENGINE FOR AN AIRCRAFT WITH IMPROVED OPENING

(30) Priorité: 29.09.2017 FR 1759093
(43) Date de publication de la demande: 03.04.2019
(73) Titulaire: Airbus Operations S.A.S., 31060 Toulouse (FR)
(72) Inventeur: COMBES, Stéphane, 31660 Buzet sur Tarn (FR); DEFORET, Thomas, 31300 Toulouse (FR); GELIOT, Jean, 31400 Toulouse (FR); ORTEU, Benoit, 31000 Toulouse (FR); SOULIE, Adeline, 82600 Verdun sur Garonne (FR)
(74) Mandataire: Gicquel, Olivier Yves Gérard

(56) Documents cités:
- EP-A1- 2 862 805
- WO-A1-2015/010271
- US-A- 2 494 347

## Description

### DOMAINE TECHNIQUE

La présente invention concerne un turboréacteur double flux pour un aéronef, ledit turboréacteur comprenant un capot monté mobile en rotation par rapport à une structure fixe et une ouverture améliorée. La présente invention concerne également un aéronef comportant au moins un tel turboréacteur double flux.

### ETAT DE LA TECHNIQUE ANTERIEURE

Un aéronef comporte classiquement au moins une aile sous laquelle est fixé un mât auquel est fixé un turboréacteur double flux.

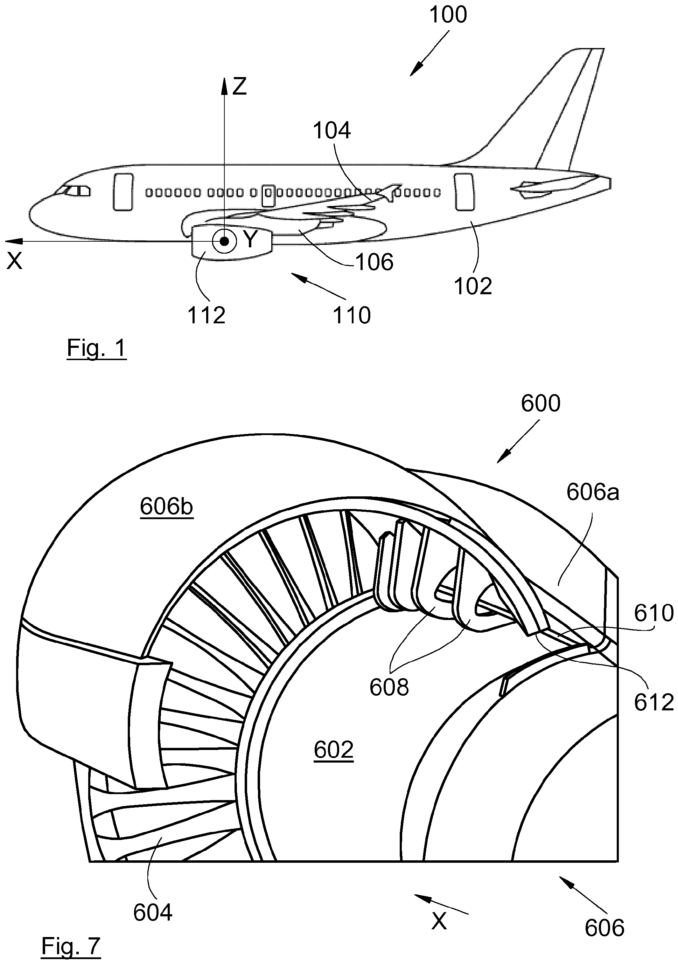

La Fig. 7 montre un turboréacteur double flux 600 de l'état de la technique qui comporte un noyau central 602 constituant le moteur avec une chambre de combustion, une soufflante 604 qui est à l'avant du noyau central 602 et un capot intérieur 606 qui constitue la paroi intérieure d'une veine secondaire et qui s'étend autour du noyau central 602, et un capot extérieur qui constitue la paroi extérieure de la veine secondaire et qui s'étend autour du capot intérieur 606.

Pour assurer la maintenance du turboréacteur double flux 600, le capot intérieur 606 et le capot extérieur comportent chacun au moins un capot qui est monté mobile en rotation sur une structure fixe du turboréacteur par l'intermédiaire de charnières 608.

Le capot intérieur 606 présente ainsi une partie fixe 606a solidaire de la structure fixe et un capot mobile 606b. La partie fixe 606a présente un premier bord 610 et le capot mobile 606b présente un deuxième bord 612. Lorsque le capot mobile 606b est en position fermée, le deuxième bord 612 s'étend le long du premier bord 610 et le capot mobile 606b prolonge la partie fixe 606a afin de former une surface continue afin d'assurer une étanchéité. Lorsque le capot mobile 606b est en position ouverte, le deuxième bord 612 est écarté du premier bord 610 et le capot mobile 606b est écarté vers l'extérieur de la partie fixe 606a.

Concernant le capot mobile 606b, il est souhaitable que ses charnières 608 n'influent pas sur l'écoulement de l'air dans la veine secondaire. Pour cela, elles sont cachées du côté du noyau central 602. En outre, du fait de la présence du premier bord 610, chaque charnière 608 doit prendre une forme qui lui permet de faire le tour dudit premier bord 610. Du fait de ces différentes contraintes, chaque charnière 608 prend la forme d'un col de cygne.

Si ces charnières avec ferrure en col de cygne 608 permettent d'assurer un bon écoulement de l'air, elles peuvent devenir rapidement encombrantes et devenir intrusives vis-à-vis des éléments qui sont logés à l'intérieur du capot intérieur 606, comme par exemple, des canalisations et des conducteurs électriques. La mise en place de telles charnières génère alors des problèmes d'encombrements. Le document US2494347 décrit un turboréacteur double flux comportant un capot mobile par l'intermédiaire des ferrures en col de cygne.

### EXPOSE DE L'INVENTION

Un objet de la présente invention est de proposer un turboréacteur double flux qui présente un capot avec un capot monté mobile en rotation par l'intermédiaire d'au moins une charnière avec ferrure en col de cygne dont l'encombrement est réduit.

A cet effet, est proposé un turboréacteur double flux pour un aéronef tel que revendiqué à la revendication 1.

La présence d'un évidement pour la ferrure en col de cygne autorise une diminution des dimensions du col de cygne lors du mouvement du capot mobile.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef présentant au moins un turboréacteur double flux selon l'invention,
la Fig. 2 est une vue en perspective d'un capot mobile en position ouverte et monté sur des charnières avec ferrure en col de cygne d'un turboréacteur double flux selon l'invention,
la Fig. 3 est une vue en coupe par le plan III de la Fig. 2 en position fermée du capot mobile pour un premier mode de réalisation de l'invention,
la Fig. 4 est une vue similaire à la celle de la Fig. 3, en position ouverte du capot mobile,
la Fig. 5 est une vue en coupe par le plan III de la Fig. 2 en position fermée du capot mobile pour un deuxième mode de réalisation de l'invention,
la Fig. 6 montre un agrandissement de la Fig. 2, et
la Fig. 7 est une vue en perspective d'un turboréacteur double flux de l'état de la technique avec un capot mobile en position ouverte.

### EXPOSE DETAILLE DE MODES DE REALISATION

Dans la description qui suit, les termes relatifs à une position sont pris en référence à un aéronef en position d'avancement normal, c'est-à-dire comme il est représenté sur la Fig. 1.

La Fig. 1 montre un aéronef 100 qui comporte un fuselage 102 présentant une aile 104 de chaque côté. Sous chaque aile 104 est fixé au moins un turboréacteur double flux 110 par l'intermédiaire d'un mât 106.

Dans toute la description qui va suivre, par convention, la direction X correspond à la direction longitudinale du turboréacteur double flux 110, cette direction étant parallèle à l'axe longitudinal du turboréacteur double flux 110. D'autre part, la direction Y correspond à la direction orientée transversalement par rapport au turboréacteur double flux 110, et la direction Z correspond à la direction verticale ou à la hauteur, ces trois directions X, Y, Z étant orthogonales entre elles.

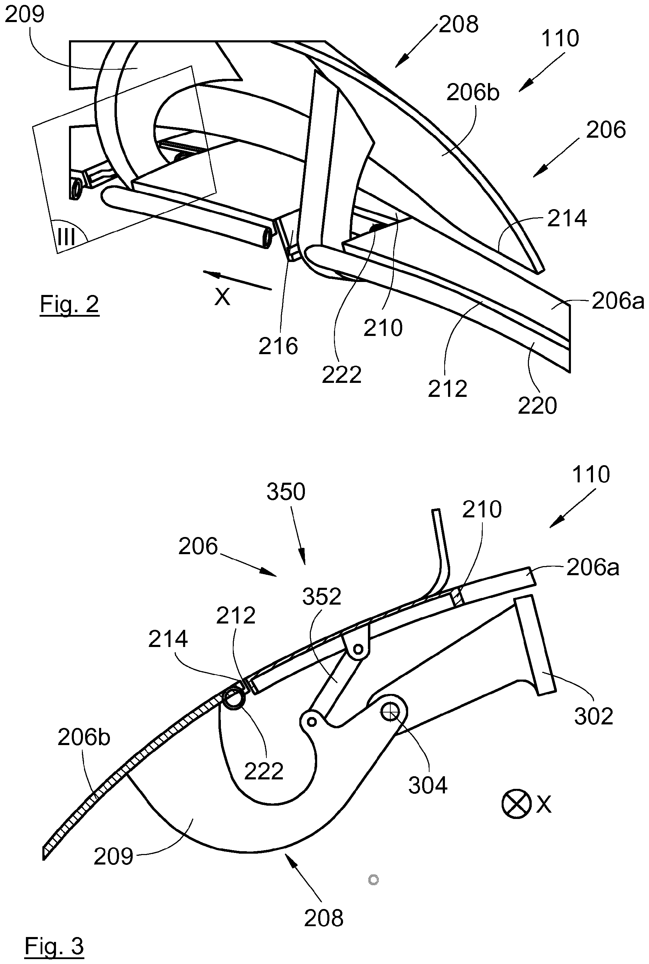

La Fig. 2 montre le turboréacteur double flux 110 dont la constitution est similaire à celle du turboréacteur double flux de l'état de la technique et il comporte un noyau central constituant le moteur avec une chambre de combustion, une soufflante et un capot intérieur 206 qui constitue la paroi intérieure d'une veine secondaire s'étendant autour du noyau central.

Le turboréacteur double flux 110 comporte également un capot extérieur 112 visible sur la Fig. 1, qui constitue la paroi extérieure de la veine secondaire et qui s'étend autour du capot intérieur 206.

Classiquement, le capot extérieur 112 est monté mobile en rotation sur le mât 106 ou sur une structure fixe du turboréacteur double flux 110 par l'intermédiaire de charnières.

Le capot intérieur 206 comporte une partie fixe 206a qui est solidaire d'une structure fixe du turboréacteur double flux 110, et un capot mobile 206b qui est monté mobile en rotation sur la structure fixe du turboréacteur double flux 110 par l'intermédiaire d'au moins une charnière avec ferrure en col de cygne 208. L'axe de rotation du capot mobile 206b et donc des charnières avec ferrure en col de cygne 208 est globalement parallèle à la direction longitudinale X. Chaque charnière avec ferrure en col de cygne 208 comporte ici une ferrure en col de cygne 209.

La partie fixe 206a présente un premier bord 212 et le capot mobile 206b présente un deuxième bord 214. Lorsque le capot mobile 206b est en position fermée, le deuxième bord 214 s'étend contre le premier bord 212 et le capot mobile 206b prolonge la partie fixe 206a afin de former une surface continue. Lorsque le capot mobile 206b est en position ouverte, le deuxième bord 214 est écarté du premier bord 212 et le capot mobile 206b est écarté vers l'extérieur de la partie fixe 206a, c'est-à-dire en travers de la veine secondaire et permet l'accès à l'intérieur du noyau central.

Chaque ferrure en col de cygne 209 prend globalement la forme d'un C dont une extrémité est solidaire du capot mobile 206b et dont l'autre extrémité est montée articulée sur la structure fixe et sous la partie fixe 206a, c'est-à-dire du côté opposé à la veine secondaire.

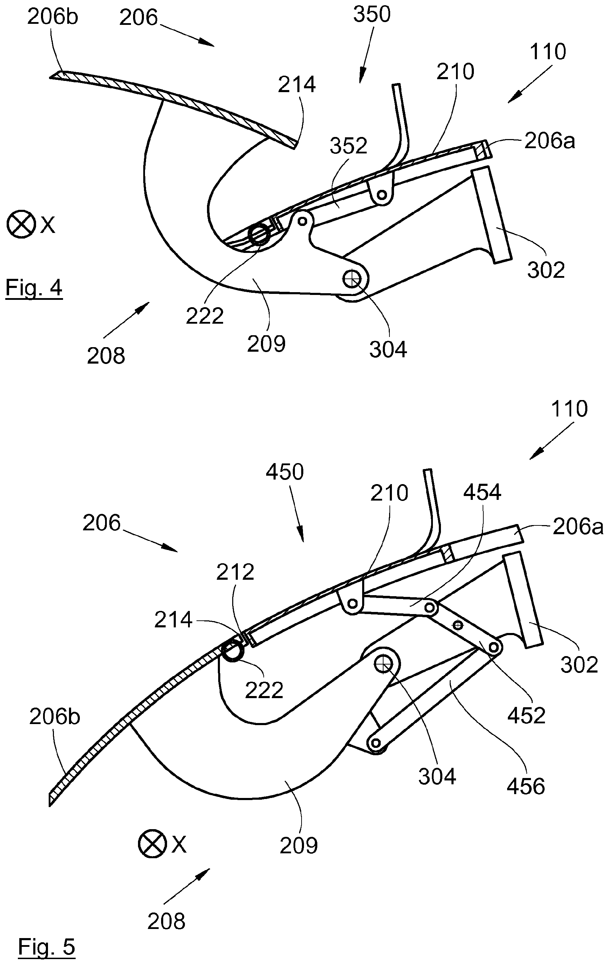

La Fig. 3 et la Fig. 4 montrent une coupe du turboréacteur double flux 110 au niveau d'une charnière avec ferrure en col de cygne 208, respectivement lorsque le capot mobile 206b est en position fermée et en position ouverte pour un premier mode de réalisation de l'invention.

La Fig. 5 montre une coupe du turboréacteur double flux 110 au niveau d'une charnière avec ferrure en col de cygne 208 en position fermée pour un deuxième mode de réalisation de l'invention.

La ferrure en col de cygne 209 est montée articulée sur la structure fixe 302 par l'intermédiaire d'une liaison pivot 304 réalisée, par exemple, sous forme d'une chape.

Pour chaque charnière avec ferrure en col de cygne 208, la partie fixe 206a est évidée au niveau du premier bord 212, de manière à délimiter un évidement 216 qui s'étend depuis le premier bord 212. L'évidement 216 se situe en regard de la ferrure en col de cygne 209 et permet le passage de la ferrure en col de cygne 209 lorsque le capot mobile 206b passe de la position fermée à la position ouverte et inversement. Ainsi, lorsque le capot mobile 206b passe de la position fermée à la position ouverte, la ferrure en col de cygne 209 traverse l'évidement 216 sans être gênée par le premier bord 212 et les dimensions de la ferrure en col de cygne 209 peuvent être réduites par rapport à celles des ferrures de l'état de la technique car la ferrure en col de cygne 209 n'a plus à faire le tour du premier bord 212. Un tel agencement procure ainsi un encombrement réduit. La largeur de l'évidement 216 est supérieure à l'épaisseur de la ferrure en col de cygne 209 pour éviter les contacts.

Pour assurer l'étanchéité au niveau de l'évidement 216 lorsque le capot mobile 206b est en position fermée, la partie fixe 206a est équipée, pour chaque évidement 216, d'un tiroir 210 qui est monté coulissant par rapport à la partie fixe 206b dans l'évidement 216.

Le tiroir 210 est ainsi mobile entre une position d'obturation dans laquelle il obture l'évidement 216 et une position escamotée dans laquelle il s'escamote pour laisser libre l'évidement 216. Le coulissement du tiroir 210 par rapport à la partie fixe 206a est réalisé par une liaison glissière entre eux.

Le turboréacteur double flux 110 comporte également un système de transmission de mouvement 350, 450 qui est prévu pour déplacer le tiroir 210 de la position d'obturation vers la position escamotée en même temps que le capot mobile 206b passe de la position fermée à la position ouverte et inversement. Ainsi, lorsque le capot mobile 206b se déplace de la position fermée à la position ouverte, le tiroir 210 se retire de l'évidement 216 et le libère afin de permettre le passage de la ferrure en col de cygne 209.

En position d'obturation, un bord du tiroir 210 prolonge le premier bord 212 et vient contre le deuxième bord 214 et le tiroir 210 forme une continuité aérodynamique avec la partie fixe 206a et le capot mobile 206b.

Dans le premier mode de réalisation de l'invention représenté sur les Figs. 3 et 4, le système de transmission de mouvement 350 prend la forme d'une bielle 352 dont une extrémité est montée articulée sur le tiroir 210 et dont l'autre extrémité est montée articulée sur la ferrure en col de cygne 209. La bielle 352 est, par exemple, une bielle à rotules et pour effectuer un réglage précis, la bielle 352 est préférentiellement réglable en longueur.

Dans le deuxième mode de réalisation de l'invention représenté sur la Fig. 5, le système de transmission de mouvement 450 comporte un guignol de renvoi 452 monté mobile en rotation sur la structure fixe 302, une première bielle 454 dont une extrémité est montée articulée sur le tiroir 210 et dont l'autre extrémité est montée articulée sur l'une des extrémités du guignol de renvoi 452, et une deuxième bielle 456 dont une extrémité est montée articulée à l'autre extrémité du guignol de renvoi 452 et dont l'autre extrémité est montée articulée sur la ferrure en col de cygne 209. Chaque bielle 454, 456 est, par exemple, une bielle à rotules et pour effectuer un réglage précis, chaque bielle 454, 456 est préférentiellement réglable en longueur.

L'agencement du deuxième mode de réalisation permet un gain supplémentaire de place et permet de jouer sur l'amplitude du mouvement en agissant sur la fonction de bras de levier du guignol de renvoi 452.

Dans les deux modes de réalisation présentés ici, les axes de rotations liés au système de transmission de mouvement 350, 450 sont parallèles à la direction longitudinale X.

Pour assurer une meilleure étanchéité en position fermée, le premier bord 212 porte un joint principal 220 qui court le long dudit premier bord 212 et pour chaque tiroir 210, le bord du tiroir 210 qui prolonge le premier bord 212 en position d'obturation, porte un joint secondaire 222 qui, en position d'obturation, prolonge le joint principal 220.

Du fait de la présence des évidements 216, le joint principal 220 est discontinu à chaque évidement 216 et la présence du joint secondaire 222 sur chaque tiroir 210 permet de prolonger le joint principal 220 et de combler chaque discontinuité.

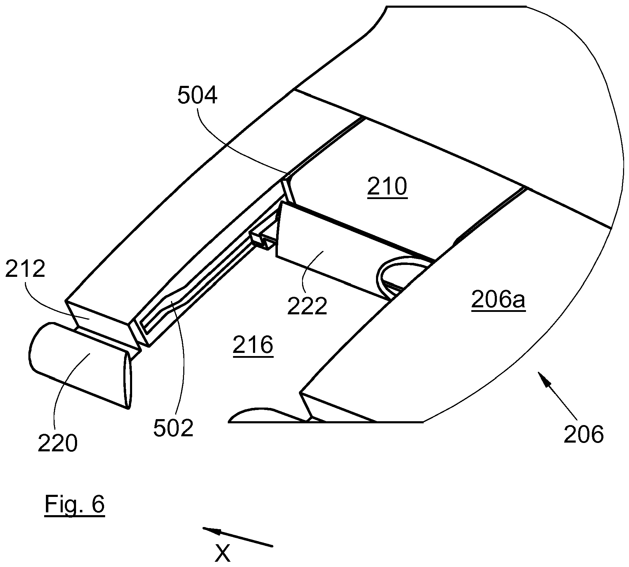

La Fig. 6 montre un agrandissement d'un tiroir 210 en position escamotée dans la partie fixe 206a.

La liaison glissière entre le tiroir 210 et la partie fixe 206a est réalisée ici par deux rainures 502 qui sont parallèles et réalisées dans la partie fixe 206a de part et d'autre du tiroir 210, et par quatre plots solidaires du tiroir 210 et répartis par paires de part et d'autre du tiroir 210 où chaque paire de plots glisse dans une des rainures 502.

Pour assurer l'étanchéité entre le tiroir 210 et la partie fixe 206a, un joint périphérique 504 est fixé de part et d'autre du tiroir 210 et il est disposé entre le tiroir 210 et la partie fixe 206a.

L'invention a été plus particulièrement décrite dans le cas d'un capot intérieur, mais elle peut s'appliquer de la même manière à un capot extérieur qui constitue une paroi extérieure de la veine secondaire.

## Revendications

1. Turboréacteur double flux (110) pour un aéronef (100), ledit turboréacteur double flux (110) comportant :
- une structure fixe (302),
- un noyau central constituant le moteur,
- un capot (206) qui constitue une paroi d'une veine secondaire s'étendant autour du noyau central, le capot (206) comportant une partie fixe (206a) solidaire de la structure fixe et un capot mobile (206b) monté mobile en rotation sur la structure fixe (302) par l'intermédiaire d'au moins une charnière avec ferrure en col de cygne (208) entre une position ouverte et une position fermée, la partie fixe (206a) présentant un premier bord (212) et le capot mobile (206b) présentant un deuxième bord (214), où lorsque le capot mobile (206b) est en position fermée, le deuxième bord (214) s'étend contre le premier bord (212) et où lorsque le capot mobile (206b) est en position ouverte, le deuxième bord (214) est écarté du premier bord (212),
le turboréacteur double flux (110) étant **caractérisé en ce que** pour chaque charnière avec ferrure en col de cygne (208), la partie fixe (206a) est évidée au niveau du premier bord (212), de manière à délimiter un évidement (216) qui s'étend depuis le premier bord (212) et **en ce que** l'évidement (216) se situe en regard de la ferrure en col de cygne (209) et permet le passage de la ferrure en col de cygne (209) lorsque le capot mobile (206b) passe de la position fermée à la position ouverte.

2. Turboréacteur double flux (110) selon la revendication 1, **caractérisé en ce que**, pour chaque évidement (216), le turboréacteur double flux (110) comporte :
- un tiroir (210) qui est monté coulissant par rapport à la partie fixe (206b) dans l'évidement (216), entre une position d'obturation dans laquelle il obture l'évidement (216) et une position escamotée dans laquelle il s'escamote pour laisser libre l'évidement (216), et
- un système de transmission de mouvement (350, 450) qui est prévu pour déplacer le tiroir (210) de la position d'obturation vers la position escamotée en même temps que le capot mobile (206b) passe de la position fermée à la position ouverte et inversement.

3. Turboréacteur double flux (110) selon la revendication 2, **caractérisé en ce que** le système de transmission de mouvement (350) est une bielle (352) dont une extrémité est montée articulée sur le tiroir (210) et dont l'autre extrémité est montée articulée sur la ferrure en col de cygne (209).

4. Turboréacteur double flux (110) selon la revendication 2, **caractérisé en ce que** le système de transmission de mouvement (450) comporte un guignol de renvoi (452) monté mobile en rotation sur la structure fixe (302), une première bielle (454) dont une extrémité est montée articulée sur le tiroir (210) et dont l'autre extrémité est montée articulée sur l'une des extrémités du guignol de renvoi (452), et une deuxième bielle (456) dont une extrémité est montée articulée à l'autre extrémité du guignol de renvoi (452) et dont l'autre extrémité est montée articulée sur la ferrure en col de cygne (209).

5. Turboréacteur double flux (110) selon l'une des revendications 2 à 4, **caractérisé en ce qu'**il comporte :
- un joint principal (220) qui court le long du premier bord (212), et
- pour chaque tiroir (210), un joint secondaire (222) qui est fixé sur le tiroir (210) et qui, en position d'obturation, prolonge le joint principal (220).

6. Turboréacteur double flux (110) selon l'une des revendications 2 à 5, **caractérisé en ce que** la liaison glissière entre le tiroir (210) et la partie fixe (206a) est réalisée par deux rainures (502) qui sont parallèles et réalisées dans la partie fixe (206a) de part et d'autre du tiroir (210), et par quatre plots solidaires du tiroir (210) et répartis par paires de part et d'autre du tiroir (210) où chaque paire de plots glisse dans une des rainures (502).

7. Turboréacteur double flux (110) selon l'une des revendications 2 à 6, **caractérisé en ce qu'**il comporte un joint périphérique (504) fixé de part et d'autre du tiroir (210) et disposé entre le tiroir (210) et la partie fixe (206a).

8. Turboréacteur double flux (110) selon l'une des revendications 1 à 7, **caractérisé en ce que** le capot (206) est un capot intérieur (206) qui constitue une paroi intérieure de la veine secondaire.

9. Turboréacteur double flux (110) selon l'une des revendications 1 à 7, **caractérisé en ce que** le capot est un capot extérieur qui constitue une paroi extérieure de la veine secondaire.

10. Aéronef (100) comportant au moins un turboréacteur double flux (110) selon l'une des revendications précédentes.

## Patentansprüche

1. Zweistrom-Turbostrahltriebwerk (110) für ein Luftfahrzeug (100), wobei das Zweistrom-Turbostrahltriebwerk (110) aufweist:
- eine feste Struktur (302),
- einen zentralen Kern, der den Motor bildet,
- eine Haube (206), welche eine Wand eines sekundären Strömungskanals bildet, der sich um den zentralen Kern herum erstreckt, wobei die Haube (206) einen festen Teil (206a) aufweist, der mit der feste Struktur fest verbunden ist, und eine bewegliche Haube (206b), die an der festen Struktur (302) über wenigstens ein Scharnier mit schwanenhalsförmigem Verbindungsstück (208) drehbeweglich zwischen einer geöffneten Position und einer geschlossenen Position angebracht ist, wobei der feste Teil (206a) einen ersten Rand (212) aufweist und die bewegliche Haube (206b) einen zweiten Rand (214) aufweist, wobei, wenn sich die bewegliche Haube (206b) in der geschlossenen Position befindet, der zweite Rand (214) sich bis an den ersten Rand (212) erstreckt, und wobei, wenn sich die bewegliche Haube (206b) in der geöffneten Position befindet, der zweite Rand (214) von dem ersten Rand (212) entfernt ist,
wobei das Zweistrom-Turbostrahltriebwerk (110) **dadurch gekennzeichnet ist, dass** für jedes Scharnier mit schwanenhalsförmigem Verbindungsstück (208) der feste Teil (206a) am ersten Rand (212) ausgespart ist, so dass eine Aussparung (216) begrenzt wird, welche sich vom ersten Rand (212) aus erstreckt, und dadurch, dass sich die Aussparung (216) gegenüber dem schwanenhalsförmigen Verbindungsstück (209) befindet und die Hindurchbewegung des schwanenhalsförmigen Verbindungsstücks (209) ermöglicht, wenn sich die bewegliche Haube (206b) aus der geschlossenen Position in die geöffnete Position bewegt.

2. Zweistrom-Turbostrahltriebwerk (110) nach Anspruch 1, **dadurch gekennzeichnet, dass** für jede Aussparung (216) das Zweistrom-Turbostrahltriebwerk (110) aufweist:
- einen Schieber (210), welcher in der Aussparung (216) gleitend in Bezug auf den festen Teil (206b) zwischen einer Verschlussposition, in welcher er die Aussparung (216) verschließt, und einer eingezogenen Position, in welcher er eingezogen wird, um die Aussparung (216) frei zu lassen, angebracht ist, und
- ein Bewegungsübertragungssystem (350, 450), welches dafür vorgesehen ist, wenn sich die bewegliche Haube (206b) aus der geschlossenen Position in die geöffnete Position bewegt, gleichzeitig den Schieber (210) aus der Verschlussposition zur eingezogenen Position hin zu verschieben, und umgekehrt.

3. Zweistrom-Turbostrahltriebwerk (110) nach Anspruch 2, **dadurch gekennzeichnet, dass** das Bewegungsübertragungssystem (350) eine Schubstange (352) ist, von der ein Ende an dem Schieber (210) angelenkt ist und von der das andere Ende an dem schwanenhalsförmigen Verbindungsstück (209) angelenkt ist.

4. Zweistrom-Turbostrahltriebwerk (110) nach Anspruch 2, **dadurch gekennzeichnet, dass** das Bewegungsübertragungssystem (450) einen Umlenkhebel (452), der drehbeweglich an der festen Struktur (302) angebracht ist, eine erste Schubstange (452), von der ein Ende an dem Schieber (210) angelenkt ist und von der das andere Ende an einem der Enden des Umlenkhebels (452) angelenkt ist, und eine zweite Schubstange (456), von der ein Ende an dem anderen Ende des Umlenkhebels (452) angelenkt ist und von der das andere Ende an dem schwanenhalsförmigen Verbindungsstück (209) angelenkt ist, aufweist.

5. Zweistrom-Turbostrahltriebwerk (110) nach einem der Ansprüche 2 bis 4, **dadurch gekennzeichnet, dass** es aufweist:
- eine Hauptdichtung (220), welche entlang des ersten Randes (212) verläuft, und
- für jeden Schieber (210), eine Sekundärdichtung (222), welche an dem Schieber (210) befestigt ist und welche in der Verschlussposition die Hauptdichtung (220) verlängert.

6. Zweistrom-Turbostrahltriebwerk (110) nach einem der Ansprüche 2 bis 5, **dadurch gekennzeichnet, dass** die Gleitverbindung zwischen dem Schieber (210) und dem festen Teil (206a) durch zwei Nuten (502) realisiert wird, welche parallel sind und in dem festen Teil (206a) beiderseits des Schiebers (210) ausgebildet sind, und durch vier Blöcke, die mit dem Schieber (210) fest verbunden und paarweise beiderseits des Schiebers (210) verteilt sind, wobei jedes Paar von Blöcken in einer der Nuten (502) gleitet.

7. Zweistrom-Turbostrahltriebwerk (110) nach einem der Ansprüche 2 bis 6, **dadurch gekennzeichnet, dass** es eine Umfangsdichtung (504) aufweist, die beiderseits des Schiebers (210) befestigt ist und zwischen dem Schieber (210) und dem festen Teil (206a) angeordnet ist.

8. Zweistrom-Turbostrahltriebwerk (110) nach einem der Ansprüche 1 bis 7, **dadurch gekennzeichnet, dass** die Haube (206) eine innere Haube (206) ist, welche eine innere Wand des sekundären Strömungskanals bildet.

9. Zweistrom-Turbostrahltriebwerk (110) nach einem der Ansprüche 1 bis 7, **dadurch gekennzeichnet, dass** die Haube eine äußere Haube ist, welche eine äußere Wand des sekundären Strömungskanals bildet.

10. Luftfahrzeug (100), welches wenigstens ein Zweistrom-Turbostrahltriebwerk (110) nach einem der vorhergehenden Ansprüche aufweist.

## Claims

1. Dual-flow jet engine (110) for an aircraft (100), said dual-flow jet engine (110) comprising:
- a fixed structure (302),
- a central core constituting the engine,
- a cowl (206) which constitutes a wall of a secondary jet extending around the central core, the cowl (206) comprising a fixed part (206a) secured to the fixed structure and a mobile cowl (206b) mounted to be rotationally mobile on the fixed structure (302) via at least one hinge with swan neck fitting (208) between an open position and a closed position, the fixed part (206a) having a first edge (212) and the mobile cowl (206b) having a second edge (214), in which, when the mobile cowl (206b) is in closed position, the second edge (214) extends against the first edge (212) and in which, when the mobile cowl (206b) is in open position, the second edge (214) is separated from the first edge (212),
the dual-flow jet engine (110) being **characterized in that**, for each hinge with swan neck fitting (208), the fixed part (206a) is hollowed at the first edge (212), so as to delimit a recess (216) which extends from the first edge (212) and **in that** the recess (216) is situated opposite the swan neck fitting (209) and allows the passage of the swan neck fitting (209) when the mobile cowl (206b) switches from the closed position to the open position.

2. Dual-flow jet engine (110) according to Claim 1, **characterized in that**, for each recess (216), the dual-flow jet engine (110) comprises:
- a slide valve (210) which is mounted to slide relative to the fixed part (206b) in the recess (216), between a blocking position in which it blocks the recess (216) and a retracted position in which it is retracted to leave the recess (216) free, and
- a movement transmission system (350, 450) which is provided to displace the slide valve (210) from the blocking position to the retracted position at the same time as the mobile cowl (206b) switches from the closed position to the open position and vice versa.

3. Dual-flow jet engine (110) according to Claim 2, **characterized in that** the movement transmission system (350) is a connecting rod (352) of which one end is mounted articulated on the slide valve (210) and of which the other end is mounted articulated on the swan neck fitting (209).

4. Dual-flow jet engine (110) according to Claim 2, **characterized in that** the movement transmission system (450) comprises a return bellcrank (452) mounted to be rotationally mobile on the fixed structure (302), a first connecting rod (454) of which one end is mounted articulated on the slide valve (210) and of which the other end is mounted articulated on one of the ends of the return bellcrank (452), and a second connecting rod (456) of which one end is mounted articulated at the other end of the return bellcrank (452) and of which the other end is mounted articulated on the swan neck fitting (209).

5. Dual-flow jet engine (110) according to one of Claims 2 to 4, **characterized in that** it comprises:
- a main seal (220) which runs along the first edge (212), and
- for each slide valve (210), a secondary seal (222) which is fixed onto the slide valve (210) and which, in blocking position, extends the main seal (220) .

6. Dual-flow jet engine (110) according to one of Claims 2 to 5, **characterized in that** the slide link between the slide valve (210) and the fixed part (206a) is produced by two grooves (502) which are parallel and produced in the fixed part (206a) on either side of the slide valve (210), and by four blocks secured to the slide valve (210) and distributed in pairs on either side of the slide valve (210) in which each pair of blocks slides in one of the grooves (502).

7. Dual-flow jet engine (110) according to one of Claims 2 to 6, **characterized in that** it comprises a peripheral seal (504) fixed on either side of the slide valve (210) and arranged between the slide valve (210) and the fixed part (206a).

8. Dual-flow jet engine (110) according to one of Claims 1 to 7, **characterized in that** the cowl (206) is an inner cowl (206) which constitutes an inner wall of the secondary jet.

9. Dual-flow jet engine (110) according to one of Claims 1 to 7, **characterized in that** the cowl is an outer cowl which constitutes an outer wall of the secondary jet.

10. Aircraft (100) comprising at least one dual-flow jet engine (110) according to one of the preceding claims.
